# EUROPÄISCHE PATENTANMELDUNG

(11) **EP 0 572 811 A1**
(43) Veröffentlichungstag der Anmeldung: **08.12.1993**
(21) Anmeldenummer: 93107239.1
(22) Anmeldetag: 05.05.1993
(51) Int. Cl.: B60N 2/30, B60N 2/24

(54) **Reisebegleitsitz in Omnibussen**

(30) Priorität: 04.06.1992 DE 4218373
(71) Anmelder: MAN NUTZFAHRZEUGE AG, 80976 München (DE)
(72) Erfinder: Krimmling, Harald, Dipl.-Ing., W-8893 Hilgertshausen (DE)

(57) **Zusammenfassung**

Omnibusse, insbesondere Reiseomnibusse, verfügen in der Regel über Reisebegleitsitze, die neben dem Fahrersitz angeordnet sind. Der erfindungsgemäße Reisebegleitsitz zeichnet sich durch seine Verschwenkbarkeit in die Beifahrernische (4) bei umgeklappter Rückenlehne (3) aus, wobei die Rückenlehne (3) nicht über das Armaturenbrett (5) hinausragt. Für die Verschwenkung des Sitzes (1) ist ein unter dem Sitz und am Beifahrerplatzboden (6) angelenkter Winkelhebel vorgesehen. Als Antrieb für das Verschwenken des Winkelhebels (7) und des Sitzes (1) sind je ein Schneckenantrieb (2) angeordnet.

## Beschreibung

Die Erfindung bezieht sich auf einen vorklappbaren Reisebegleitsitz neben dem Fahrersitz in Omnibussen.

Solche, dem Stand der Technik nach bekannten Reisebegleitsitze bauen im vorgeklappten Zustand höher als das Armaturenbrett und behindern so die Sicht des Fahrers. Auch wenn der Reisebegleitsitz nicht genutzt wird, muß dieser vom Fahrer im Fahrbetrieb zurückgeklappt und zum Ein- und Aussteigen der Passagiere vorgeklappt werden.

Der Erfindung liegt die Aufgabe zugrunde, für den Fahrer in jedem Betriebszustand uneingeschränkte Sichtverhältnisse zu schaffen.

Dies wird erfindungsgemäß durch die Verschwenkbarkeit des Sitzes in die Beifahrernische bei umgeklappter Rückenlehne erreicht, wobei die Rückenlehne nicht über das Armaturenbrett hinausragt. Solcherart kann der Reisebegleitsitz, sofern er nicht von einem Reisebegleiter belegt ist, uneingeschränkt im versenkten Zustand verbleiben, ohne daß seine Rückenlehne das Sichtfeld des Fahrers einschränkt.

Nach einer bevorzugten Ausgestaltung der Erfindung ist für die Verschwenkung des Sitzes ein unter dem Sitz und am Fahrerplatzboden angelenkter Winkelhebel vorgesehen. Die Versenkung des Sitzes erfolgt durch eine doppelte Schwenkbewegung, nämlich zum einen um eine am Beifahrerhausboden angeordnete und zum anderen um eine unter der Sitzfläche gelegene Gelenkachse. Diese Verstellung kann zum Beispiel in der einfachsten Weise durch entsprechend geführten Handdruck geschehen.

In Erweiterung der Erfindung kann als Antrieb für das Verschwenken des Winkelhebels und des Sitzes je ein Schneckentrieb vorgesehen sein. Auf diese Weise erfolgen die beiden Schwenkbewegungen automatisch und können zum Beispiel über einen Schalter ausgelöst werden, wobei sie in zeitlicher Überlagerung so optimiert werden, daß der Sitz, ohne am Armaturenbrett anzustoßen, in seine versenkte Stellung bringbar ist.

Die Erfindung ist in einem Ausführungsbeispiel dargestellt und beschrieben.

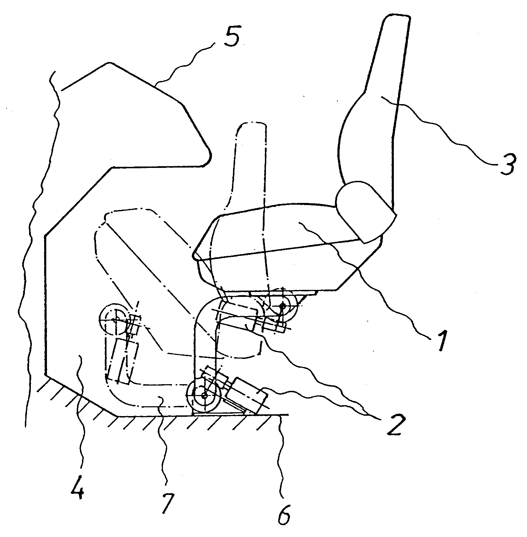

Die einzige Figur zeigt eine schematische Darstellung des Reisebegleitsitzes in der Nutzstellung und in der versenkten Position.

Der Reisebegleitsitz, im wesentlichen bestehend aus einem Sitz 1 und einer Rückenlehne 3, die in bekannter Weise auf den Sitz umgeklappt werden kann, ist über einen Winkelhebel 7 mit dem Fahrerplatzboden 6 verbunden, wobei der Winkelhebel sowohl am Boden in einem Lagerbock, wie auch unterhalb der Sitzfläche drehbar gelagert ist. Für das Verschwenken des Sitzes 1 wie auch für das Verschwenken des Winkelhebels 7 sind je ein Schneckenantrieb 2 vorgesehen. Der Sitz 1 wird nun mittels der Schneckenantriebe 2 derart in die Beifahrernische 4 hineingedreht, daß der Gelenkpunkt zwischen Sitz und Rückenlehne 3 nach unten verlagert wird. Gleichzeitig klappt die Rückenlehne 3 vor - eine elektrische Rückenlehnverstellung ist Stand der Technik. Solcherart wird erreicht, daß die Rückenlehne 3 im vorgeklappten Zustand nicht über das Armaturenbrett hinausragt. Die Sicht des Fahrers bleibt somit jederzeit uneingeschränkt und der Reisebegleitsitz kann in jedem Fahrzustand eingeklappt und damit versenkt bleiben.

### Bezugszeichenliste

- 1: Sitz
- 2: Schneckenantrieb
- 3: Rückenlehne
- 4: Beifahrernische
- 5: Armaturenbrett
- 6: Beifahrerplatzboden
- 7: Winkelhebel

## Patentansprüche

1. Vorklappbarer Reisebegleitsitz neben dem Fahrersitz in Omnibussen, gekennzeichnet durch die Verschwenkbarkeit des Sitzes (1) in die Beifahrernische (4) bei umgeklappter Rückenlehne (3), wobei die Rückenlehne (3) nicht über das Armaturenbrett (5) hinausragt.

2. Vorklappbarer Reisebegleitsitz nach Anspruch 1, dadurch gekennzeichnet, daß für die Verschwenkung des Sitzes (1) ein unter dem Sitz und am Beifahrerplatzboden (6) angelenkter Winkelhebel (7) vorgesehen ist.

3. Vorklappbarer Reisebegleitsitz nach Anspruch 1 oder 2, dadurch gekennzeichnet, daß als Antrieb für das Verschwenken des Winkelhebels (7) und des Sitzes (1) je ein Schneckenantrieb (2) vorgesehen ist.
